# EUROPÄISCHE PATENTANMELDUNG

(11) **EP 2 587 599 A1**
(43) Veröffentlichungstag der Anmeldung: **01.05.2013**
(21) Anmeldenummer: 12187000.0
(22) Anmeldetag: 02.10.2012
(51) Int. Cl.: H02B 13/025

(54) **Elektrische Schaltanlage, insbesondere Mittelspannungsschaltanlage**

(30) Priorität: 24.10.2011 DE 102011085099
(71) Anmelder: Schneider Electric Sachsenwerk GmbH, 93055 Regensburg (DE)
(72) Erfinder: El Ouadhane, Harethe, 93053 Regensburg (DE)
(74) Vertreter: Dreiss

(57) **Zusammenfassung**

Es wird eine elektrische Schaltanlage, insbesondere eine Mittelspannungsschaltanlage beschrieben, die mit einem Schaltfeld versehen ist, das ein metallisches geerdetes Gehäuse aufweist, in dem elektrische Komponenten untergebracht sind. Innerhalb des Gehäuses ist eine Anzahl aneinandergereihter metallischer Spitzen (37) vorhanden, die an dem Gehäuse gehalten und elektrisch mit diesem verbunden sind, und die jeweils dazu vorgesehen sind, einen Fußpunkt für einen gegebenenfalls entstehenden Lichtbogen zu bilden.

## Beschreibung

Die Erfindung betrifft eine elektrische Schaltanlage, insbesondere eine Mittelspannungsschaltanlage, mit einem Schaltfeld, das ein metallisches geerdetes Gehäuse aufweist, in dem elektrische Komponenten untergebracht sind.

Eine derartige elektrische Schaltanlage ist beispielsweise aus der DE 10 2009 032 539 A1 bekannt. Dort ist die Schaltanlage mit mindestens einem Schaltfeld versehen, das ein metallisches geerdetes Gehäuse aufweist, in dem elektrische Komponenten untergebracht sind. Unter anderem zum Schutz des Bedienpersonals in einem Fehlerfall sind dort beispielsweise in einem Abgangsschaltfeld sogenannte geerdete Lichtbogenstabilisatoren zwischen den einzelnen elektrischen Kabeln vorhanden. Ein entstehender Lichtbogen springt damit auf einen der Lichtbogenstabilisatoren über und wird von dort nach Masse abgeleitet.

Aufgabe der Erfindung ist es, die bekannte elektrische Schaltanlage zu verbessern.

Die Erfindung löst diese Aufgabe durch eine elektrische Schaltanlage nach dem Anspruch 1. Erfindungsgemäß ist eine Anzahl aneinandergereihter metallischer Spitzen innerhalb des Gehäuses des Schaltfelds vorhanden, die an dem Gehäuse gehalten und elektrisch mit diesem verbunden sind, und die jeweils dazu vorgesehen sind, einen Fußpunkt für einen gegebenenfalls entstehenden Lichtbogen zu bilden.

Mit Hilfe der Spitzen wird eine Anhebung des elektrischen Felds im Bereich der jeweiligen Spitze erreicht, so dass ein entstehender Lichtbogen zu einer der Spitzen überspringt und von dort nach Masse abgeleitet wird. Der Lichtbogen springt also zumindest nicht sofort zum Gehäuse des Schaltfelds über. Stattdessen wird zuerst diejenige Spitze von dem Lichtbogen verbrannt, auf die der Lichtbogen zuerst übergesprungen ist. Ist diese Spitze abgebrannt, springt der Lichtbogen aufgrund der erwähnten Anhebung des elektrischen Felds auf eine nächste benachbart angeordnete Spitze über und brennt diese ab. Dieser Ablauf setzt sich über mehrere oder über alle der aneinandergereihten Spitzen fort. Durch das Abbrennen der einzelnen Spitzen entsteht eine Verzögerungszeit, innerhalb der der Lichtbogen, wie erwähnt, noch nicht auf das Gehäuse des Schaltfelds überspringt. Innerhalb dieser Verzögerungszeit kann der Lichtbogen bzw. der dem Lichtbogen zugrundeliegende Fehlerstrom auf sonstige Weise unterbrochen werden, so dass ein Überspringen auf das Gehäuse und damit eine Beschädigung des Gehäuses des Schaltfelds vermieden wird.

Ein weiterer Vorteil der Erfindung besteht darin, dass mit Hilfe der metallischen Spitzen ein entstehender Lichtbogen quasi eingefangen und damit letztlich stabilisiert wird. Ein Überspringen des Lichtbogens zum Gehäuse des Schaltfelds wird damit, wie bereits erwähnt wurde, zumindest verzögert.

Weiterhin wird auf diese Weise auch ein Wandern des Lichtbogens beispielsweise in Richtung zu einer Tür des Schaltfelds und damit ein mögliches Schmelzen der Tür vermieden oder zumindest verzögert. Dies bedeutet eine Verminderung der Gefährdung für Bedienpersonen durch den Lichtbogen.

Weiterhin kann durch eine entsprechende Anordnung der metallischen Spitzen erreicht werden, dass die Länge eines entstehenden Lichtbogens klein bleibt bzw. sich zumindest nicht wesentlich vergrößert. Damit bleiben auch die Lichtbogenspannung und die damit verbundene, freiwerdende Energie im Wesentlichen klein.

Besonders vorteilhaft ist es, wenn die Anzahl der aneinandergereihten Spitzen derart wählbar ist, dass bei einem auf die Spitzen überspringenden Lichtbogen eine erwünschte Verzögerungszeitdauer entsteht, in der der Lichtbogen noch nicht auf das Gehäuse überspringt. Mit Hilfe der Anzahl der Spitzen kann dabei die Verzögerungszeit insbesondere derart eingestellt werden, dass der Lichtbogen bzw. der zugrundeliegende Fehlerstrom in jedem Fall auf sonstige Weise unterbrochen werden kann.

Weitere Merkmale, Anwendungsmöglichkeiten und Vorteile der Erfindung ergeben sich aus der nachfolgenden Beschreibung von Ausführungsbeispielen der Erfindung, die in den zugehörigen Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

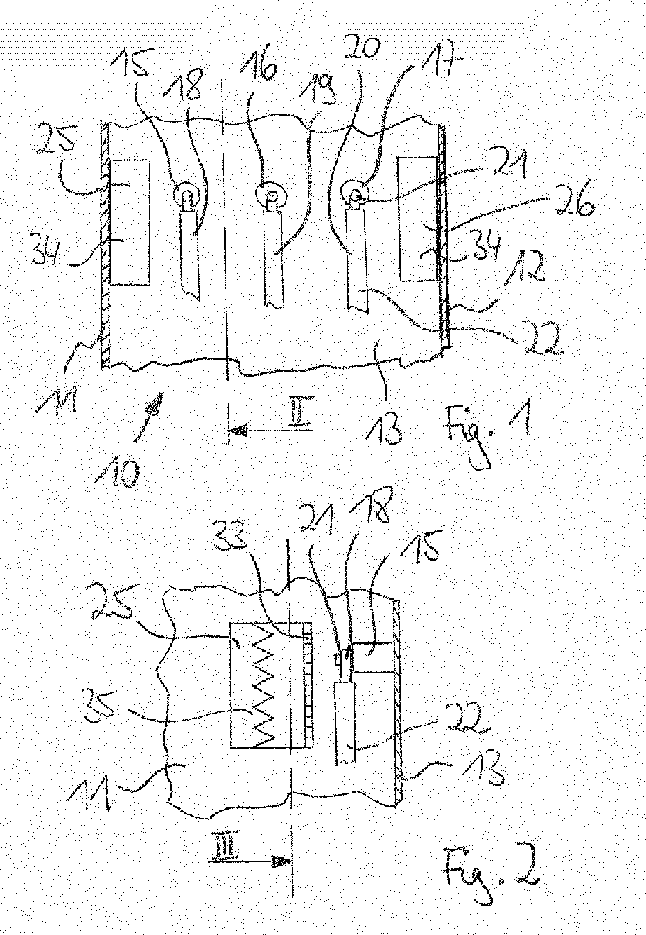

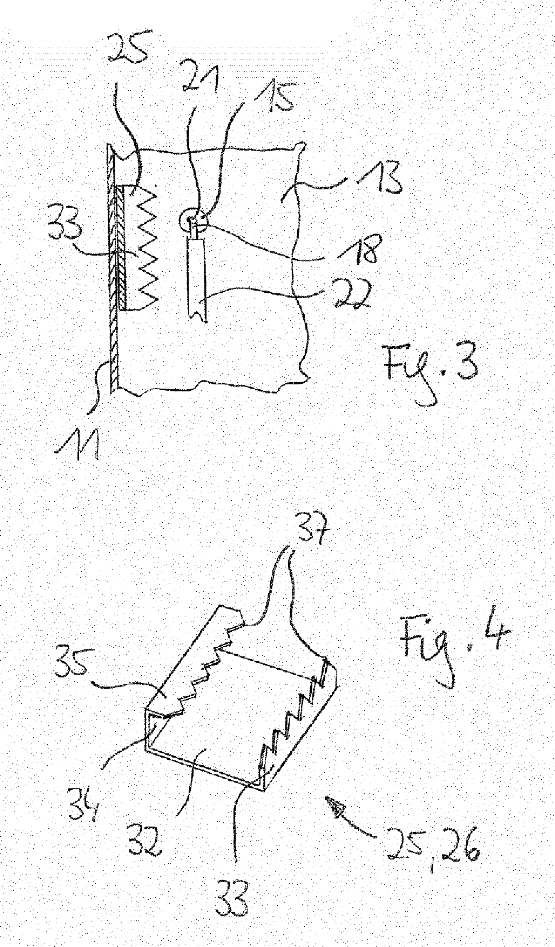

Figur 1 zeigt eine schematische Draufsicht in einen Kabelanschlussraum einer erfindungsgemäßen elektrischen Schaltanlage mit einem Ausführungsbeispiel einer erfindungsgemäßen Lichtbogen-Fangeinrichtung, Figur 2 zeigt eine schematische Ansicht des Kabelanschlussraums der Figur 1 entlang der Schnittlinie II der Figur 1, Figur 3 zeigt eine schematische Ansicht des Kabelanschlussraums der Figur 1 entlang der Schnittlinie III der Figur 2, und Figur 4 zeigt eine schematische Perspektivansicht der in der Schaltanlage der Figuren 1 bis 3 vorhandenen Lichtbogen-Fangeinrichtung.

Eine elektrische Schaltanlage, insbesondere eine Mittelspannungsschaltanlage, besteht üblicherweise aus einer Mehrzahl von Schaltfeldern, die nebeneinander angeordnet sind und die über Sammelschienen elektrisch miteinander verbunden sind. In den einzelnen Schaltfeldern sind unterschiedliche elektrische Komponenten untergebracht, beispielsweise Leistungsschalter, Trenner/Erder-Schalter und dergleichen. Durch die Verwendung entsprechender Komponenten können den einzelnen Schaltfeldern unterschiedliche Funktionen zugeordnet werden. Beispielsweise können sogenannte Abgangsschaltfelder aufgebaut werden, mit deren Hilfe Abzweigungen von den Sammelschienen zu elektrischen Verbrauchen realisierbar sind.

Ein einzelnes Schaltfeld, beispielsweise ein Abgangsschaltfeld, weist üblicherweise ein schrankförmiges, auf einem Boden aufgestelltes Gehäuse auf, das aus Metall besteht und geerdet ist. Das Gehäuse ist aus unterschiedlichen, übereinander angeordneten Behältern und/oder Räumen aufgebaut. So sind die Sammelschienen der Schaltanlage häufig in einem Sammelschienenraum im oberen Bereich des Gehäuses angeordnet. Im unteren, dem Boden benachbarten Bereich ist häfig ein Kabelanschlussraum vorhanden, in dem die nach unten in den Boden abgehenden und zu den Verbrauchern führenden elektrischen Kabel mit dem Schaltfeld verbunden sind.

In den Figuren 1 bis 3 ist ein Kabelanschlussraum 10 eines dreiphasigen Abgangsschaltfelds einer elektrischen Schaltanlage dargestellt. Der Kabelanschlussraum 10 wird links und rechts durch jeweils eine Seitenwand 11, 12 und in der Tiefe der Figur 1 durch eine Rückwand 13 des Gehäuses des Abgangsschaltfelds begrenzt. Die Seitenwände 11, 12 und die Rückwand 13 sind etwa quer zueinander und etwa vertikal ausgerichtet. Die den Kabelanschlussraum 10 weiterhin begrenzenden Boden-, Decken- und/oder Frontwände sind in den Figuren 1 bis 3 nicht dargestellt.

In der Rückwand 13 sind drei Öffnungen vorhanden, durch die drei isolierte Kabelanschlüsse 15, 16, 17 in den Kabelanschlussraum 10 hineinragen. An jedem der freien Enden der Kabelanschlüsse 15, 16, 17 ist jeweils ein elektrisches Kabel 18, 19, 20 angeschlossen, beispielsweise mittels einer Schraubverbindung 21. Die elektrischen Kabel 18, 29, 20 sind zumindest teilweise mit einer Isolation 22 versehen. Die drei Kabelanschlüsse 15, 16, 17 bzw. die drei elektrischen Kabel 18, 19, 20 sind dabei den drei Phasen des Abgangsschaltfelds zugeordnet.

An der linken und an der rechten Seitenwand 11, 12 ist jeweils eine Lichtbogen-Fangeinrichtung 25, 26 angebracht. Jede der Lichtbogen-Fangeinrichtungen 25, 26 kann mit der zugehörigen Seitenwand 11, 12 verschraubt oder verschweißt oder auf sonstige Weise fest verbunden sein. Die Lichtbogen-Fangeinrichtungen 25 ist etwa benachbart zu dem Kabelanschluss 15 und die Lichtbogen-Fangeinrichtung 26 etwa benachbart zu dem Kabelanschluss 17 angeordnet. Aufgrund der Befestigung an einer der Seitenwände 11, 12 des Kabelabgangsraums 10 sind die Lichtbogen-Fangeinrichtungen 25, 26, mit der jeweils zugehörigen Seitenwand 11, 12 elektrisch verbunden und damit geerdet.

In der Figur 4 ist ein Ausführungsbeispiel der Lichtbogen-Fangeinrichtung 25, 26 dargestellt. Die Lichtbogen-Fangeinrichtung 25, 26 besteht aus einem Metall und kann beispielsweise aus einem Blech hergestellt sein.

Die Lichtbogen-Fangeinrichtung 25, 26 ist aus einer Grundplatte 32, einer ersten Kammreihe 33, einer Seitenplatte 34 und einer zweiten Kammreihe 35 aufgebaut. Die Seitenplatte 34 ist an einer Querseite der Grundplatte 32 angebracht und steht etwa quer von der Grundplatte 32 ab. Die erste Kammreihe 33 ist an der gegenüberliegenden Querseite der Grundplatte 32 angebracht und steht etwa quer in dieselbe Richtung wie die Seitenplatte 34 ab. Die zweite Kammreihe 35 ist an der Seitenplatte 34 angebracht und steht etwa quer von der Seitenplatte 34 ab, und zwar in Richtung zu der ersten Kammreihe 33. Die zweite Kammreihe 35 ist damit etwa parallel zu der Längsseite der Grundplatte 32 ausgerichtet.

Die beiden Kammreihen 33, 35 weisen jeweils eine Anzahl von aneinandergereihten Spitzen 37 auf. Die einzelnen Spitzen 37 sind derart ausgebildet, dass sie jeweils zu einer Anhebung des elektrischen Felds führen und damit als Fußpunkt für einen Lichtbogen besonders geeignet sind. Die Anzahl und die Ausbildung der Spitzen 37 ist in der Figur 4 nur beispielhaft dargestellt und kann auch andersartig vorgesehen sein.

Die in der Figur 4 vorhandenen Abmessungen, insbesondere die Abmessungen der Quer- und der Längsseite der Grundplatte 32, sind nur beispielhaft dargestellt und können auch größer oder kleiner gewählt sein. Entsprechendes gilt für die zwischen den einzelnen Platten und Kammreihen vorhandenen Winkel. Die vorstehenden Abmessungen, wie auch die Dicke der metallischen Platten der Lichtbogen-Fangeinrichtung 25, 26 können in Abhängigkeit von einem möglichen, über die Bauteile fließenden Fehlerstrom gewählt werden.

Die einzelnen Platten und/oder Kammreihen der Lichtbogen-Fangeinrichtung 25, 26 können, wie in der Figur 4 beispielhaft dargestellt, einstückig als ein entsprechend gebogenes Blechteil ausgebildet sein. Alternativ können die einzelnen Platten und/oder Kammreihen auch als einzelne Bauteile ausgebildet und auf irgendeine Weise miteinander verbunden und/oder separat im Gehäuse des Schaltfelds befestigt sein.

Die Lichtbogen-Fangeinrichtung 25 ist derart an der Seitenwand 11 angebracht, dass die erste Kammreihe 33 benachbart zu dem Kabelanschluss 15 bzw. benachbart zu dem elektrischen Kabel 18 angeordnet ist, und dass die Spitzen 37 der ersten Kammreihe 33 in Richtung zu dem elektrischen Kabel 18 weisen. Weiterhin ist die erste Kammreihe 33 vorliegend etwa vertikal ausgerichtet. Beides ergibt sich insbesondere aus der Figur 2.

Aus der Figur 2 ist ebenfalls ersichtlich, dass die erste Kammreihe 33 einen geringeren Abstand zu dem elektrischen Kabel 18 aufweist als die zweite Kammreihe 35. In der Figur 1 wird die erste Kammreihe 33 durch die Seitenplatte 34 verdeckt. Aus der Figur 3 ergibt sich, wie die erste Kammreihe 33 etwa im Bereich des Kabelanschlusses 15 und des dort vorhandenen elektrischen Kabels 18 angeordnet ist.

Die Lichtbogen-Fangeinrichtung 26 ist in entsprechender Weise an der Seitenwand 12 angebracht. Damit ist die erste Kammreihe 33 der Lichtbogen-Fangeinrichtung 26 nächstliegend zu dem Kabelanschluss 17 bzw. dem elektrischen Kabel 20 angeordnet und etwa vertikal ausgerichtet.

Bei einem innerhalb des Abgangsschaltfelds auftretenden Fehlerstrom ist es möglich, dass an einem der drei vorhandenen elektrischen Kabel 18, 19, 20 ein Lichtbogen entsteht.

Entsteht der Lichtbogen an dem Kabelanschluss 15 bzw. an dem dortigen elektrischen Kabel 18, so springt der Lichtbogen aufgrund der erläuterten Anhebung des elektrischen Felds zu einer der Spitzen 37 der ersten Kammreihe 33 der benachbart angeordneten Lichtbogen-Fangeinrichtung 25 über. Aufgrund des hohen, über den Lichtbogen fließenden Fehlerstroms und der daraus entstehenden hohen Temperaturen verbrennt die Spitze 37, auf die der Lichtbogen übergesprungen ist. Aufgrund der örtlichen Nähe springt der Lichtbogen dann auf die nächste benachbarte Spitze 37 der ersten Kammreihe 33 über. Auch diese Spitze 37 verbrennt aufgrund der hohen Temperaturen. Der Lichtbogen springt dann auf die nächste vorhandene Spitze 37 der ersten Kammreihe 33 über, und so weiter.

Ohne eine Gegenmaßnahme würde sich dieser Ablauf wiederholen, bis alle oder zumindest nahezu alle Spitzen 37 der ersten Kammreihe 33 der Lichtbogen-Fangeinrichtung 25 verbrannt wären. Danach würde der Lichtbogen von der Lichtbogen-Fangeinrichtung 25 auf die Seitenwand 11 überspringen und dort entsprechende Schäden anrichten.

Der Vorgang des Verbrennens einer einzelnen Spitze 37 der ersten Kammreihe 33 nimmt eine gewisse Zeitdauer in Anspruch. Durch die Aneinanderreihung mehrerer Spitzen 37 auf der ersten Kammreihe 33 wird diese Zeitdauer vervielfacht. Bis zum Überspringen des Lichtbogens auf die Seitenwand 11 vergeht somit eine von der Anzahl der Spitzen 37 abhängige Verzögerungszeitdauer. Diese Verzögerungszeitdauer, in der im Wesentlichen nur die Spitzen 37 der ersten Kammreihe 33 abbrennen und in der der Lichtbogen somit noch nicht auf die Seitenwand 11 überspringt, kann mittels einer entsprechenden Vorgabe der Anzahl aneinandergereihter Spitzen 37 auf einen erwünschten Wert eingestellt werden. Beispielsweise kann die Verzögerungszeitdauer durch eine entsprechende Anzahl von Spitzen 37 bis zu einer Sekunde betragen.

Die Verzögerungszeitdauer kann dabei insbesondere derart gewählt werden, dass es innerhalb der Verzögerungszteitdauer möglich ist, den den Lichtbogen verursachenden Fehlerstrom auf sonstige Weise abzuschalten. Beispielsweise kann der Fehlerstrom durch die Auslösung eines Leistungsschalters unterbrochen werden. Damit wird erreicht, dass der Fehlerstrom beendet ist, bevor der Lichtbogen von der Lichtbogen-Fangeinrichtung 25 auf die Seitenwand 11 überspringt. Der Lichtbogen richtet damit im Wesentlichen nur an der Lichtbogen-Fangeinrichtung 25 einen Schaden an, indem er die dortigen Spitzen 37 der ersten Kammreihe 33 zerstört. Ein Überspringen des Lichtbogens auf die Seitenwand 11 und entsprechende Schäden an der Seitenwand 11 werden jedoch vermieden.

Entsteht der Lichtbogen an dem Kabelanschluss 17 bzw. an dem dortigen elektrischen Kabel 20, so springt der Lichtbogen zu einer der Spitzen 37 der ersten Kammreihe 33 der benachbart angeordneten Lichtbogen-Fangeinrichtung 26 über. Der danach folgende Ablauf entspricht dem zuvor beschriebenen Ablauf. Der Lichtbogen richtet also im Wesentlichen nur an der Lichtbogen-Fangeinrichtung 26 einen Schaden an, indem er die dortigen Spitzen 37 der ersten Kammreihe 33 zerstört. Ein Überspringen des Lichtbogens auf die Seitenwand 12 und entsprechende Schäden an der Seitenwand 12 werden jedoch vermieden.

Entsteht der Lichtbogen an dem mittleren Kabelanschluss 16 bzw. an dem dortigen elektrischen Kabel 19, so springt der Lichtbogen zu einer der Spitzen 37 der zweiten Kammreihe 35 der Lichtbogen-Fangeinrichtung 25 oder der Lichtbogen-Fangeinrichtung 26 über. Der danach folgende Ablauf entspricht wieder dem zuvor beschriebenen Ablauf. Der Lichtbogen richtet also im Wesentlichen nur an der Lichtbogen-Fangeinrichtung 25 oder an der Lichtbogen-Fangeinrichtung 26 einen Schaden an, indem er die dortigen Spitzen 37 der zweiten Kammreihe 35 zerstört. Ein Überspringen des Lichtbogens auf eine der Seitenwände 11, 12 und entsprechende Schäden an den Seitenwänden 11, 12 werden jedoch vermieden.

Die Lichtbogen-Fangeinrichtung 25, 26 kann nicht nur in dem erläuterten Abgangsschaltfeld 10 angeordnet werden, sondern überall dort an einem Ort innerhalb eines Schaltfelds einer elektrischen Schaltanlage, wo ein Überspringen eines Lichtbogens möglich und gegebenenfalls zu befürchten ist. Die Lichtbogen-Fangeinrichtung 25, 26 kann nicht nur an einer der Seitenwände 11, 12 angebracht sein, sondern auch an der Rückwand 13 oder an einer Bodenwand oder an einer Deckenwand oder an einer Frontwand eines Behälters oder eines Raums des Schaltfelds.

Ebenfalls kann die Lichtbogen-Fangeinrichtung 25, 26 mit Hilfe einer entsprechend abstehenden metallischen Halterung auch innerhalb eines Behälters oder eines Raums angeordnet sein, beispielsweise im Bereich des mittleren Kabelanschlusses 16 bzw. des zugehörigen elektrischen Kabels 19, also allgemein im Bereich einer mittleren Phase.

Die Spitzen 37 der Lichtbogen-Fangeinrichtung 25, 26 können auch andersartig ausgebildet sein. Insbesondere können die einzelnen Spitzen 37 länger ausgestaltet sein, indem beispielsweise zwischen den einzelnen Spitzen 37 tiefere Einschnitte vorhanden sind.

Die Spitzen 37 können beispielsweise auch dadurch gebildet werden, dass Metallschrauben nebeneinander in ein geerdetes Blechteil, beispielsweise in eine Gehäusewand derart eingeschraubt sind, dass ihre freien Enden die erwünschten metallischen Spitzen 37 bilden. In diesem Fall besteht also die Lichtbogen-Fangeinrichtung 25, 26 nur aus einer Anzahl aneinandergereihter Schrauben.

Grundsätzlich ist es ausreichend, wenn einer einzelnen Phase, also beispielsweise einem einzelnen elektrischen Kabel nur eine einzige Reihe mit Spitzen 37 zugeordnet ist. Es ist also möglich, dass in einem Schaltfeld für jedes elektrische Kabel eine separate Kammreihe vorhanden ist, die unabhängig voneinander innerhalb des Schaltfelds befestigt sind. Insoweit ist die Ausgestaltung der Lichtbogen-Fangeinrichtung 25, 26 gemäß der Figur 4 mit den dort vorhandenen beiden Kammreihen 33, 35 nicht zwingend erforderlich.

Bei dem Ausführungsbeispiel der Figur 4 wird jedoch durch die paarweise vorgesehenen Kammreihen 33, 35 in einfacher Weise erreicht, dass auch der mittleren Phase eines dreiphasigen Kabelanschlusses mindestens eine Kammreihe zugeordnet ist. Aufgrund der Anordnung der zweiten Kammreihe 35 weist der mittlere Kabelanschluss 16 bzw. das dort vorhandene elektrische Kabel 19 einen größeren Abstand zu den ersten Kammreihen 33 der beiden Lichtbogen-Fangeinrichtungen 25, 26 auf als zu den zweiten Kammreihen 35. Ein entstehender Lichtbogen wird daher von der mittleren Phase auf eine der Spitzen 37 der zweiten Kammreihe 35 der Lichtbogen-Fangeinrichtung 25 oder der Lichtbogen-Fangeinrichtung 26 überspringen.

Es wird nochmals darauf hingewiesen, dass die Anordnung und Ausgestaltung der Lichtbogen-Fangeinrichtung 25, 26 aus andersartig ausgebildet sein kann. Insbesondere im Hinblick auf die mittlere Phase ist es dabei möglich, dass die zweite Kammreihe 35 einen anderen Winkel zu ersten Kammreihe 33 aufweist und/oder dass die zweite Kammreihe 35 mit längeren Spitzen 37 versehen ist und/oder dass die Zwischenplatte 34 einen größeren Abstand der zweiten Kammreihe 35 im Hinblick auf die Grundplatte 32 bewirkt und so weiter.

## Patentansprüche

1. Elektrische Schaltanlage, insbesondere Mittelspannungsschaltanlage, mit einem Schaltfeld, das ein metallisches geerdetes Gehäuse aufweist, in dem elektrische Komponenten untergebracht sind, **dadurch gekennzeichnet, dass** eine Anzahl aneinandergereihter metallischer Spitzen (37) innerhalb des Gehäuses vorhanden ist, die an dem Gehäuse gehalten und elektrisch mit diesem verbunden sind, und die jeweils dazu vorgesehen sind, einen Fußpunkt für einen gegebenenfalls entstehenden Lichtbogen zu bilden.

2. Elektrische Schaltanlage nach Anspruch 1, wobei die aneinandergereihten Spitzen (37) an einem Ort innerhalb des Gehäuses angeordnet sind, wo ein Überspringen eines Lichtbogens möglich und gegebenenfalls zu befürchten ist.

3. Elektrische Schaltanlage nach einem der vorstehenden Ansprüche, wobei die aneinandergereihten Spitzen (37) einer einzelnen elektrischen Phase zugeordnet sind.

4. Elektrische Schaltanlage nach einem der vorstehenden Ansprüche, wobei die aneinandergereihten Spitzen (37) benachbart zu einem Kabelanschluss (15, 16, 17) und/oder benachbart zu einem elektrischen Kabel (18, 19, 20) angeordnet sind.

5. Elektrische Schaltanlage nach einem der vorstehenden Ansprüche, wobei die aneinandergereihten Spitzen (37) in Richtung zu einem Kabelanschluss (15, 16, 17) und/oder in Richtung zu einem elektrischen Kabel (18, 19, 20) weisen.

6. Elektrische Schaltanlage nach einem der vorstehenden Ansprüche, wobei die Anzahl der aneinandergereihten Spitzen (37) derart wählbar ist, dass bei einem auf die Spitzen (37) überspringenden Lichtbogen eine erwünschte Verzögerungszeitdauer entsteht, während der der Lichtbogen noch nicht auf das Gehäuse überspringt.

7. Elektrische Schaltanlage nach Anspruch 6, wobei innerhalb der Verzögerungszeitdauer der Lichtbogen durch eine sonstige Maßnahme unterbrechbar ist.

8. Elektrische Schaltanlage nach einem der vorstehenden Ansprüche, wobei die aneinandergereihten Spitzen (37) eine erste Kammreihe (33) einer Lichtbogen-Fangeinrichtung (25, 26) bilden.

9. Elektrische Schaltanlage nach Anspruch 8, wobei die Lichtbogen-Fangeinrichtung (25, 26) eine zweite Kammreihe (35) mit Spitzen (37) aufweist, die einer mittleren Phase zugeordnet sind.

10. Elektrische Schaltanlage nach einem der Ansprüche 8 oder 9, wobei die Lichtbogen-Fangeinrichtung (25, 26) eine Grundplatte (32) aufweist, mit der sie an dem Gehäuse des Schaltfelds befestigt ist.

11. Elektrische Schaltanlage nach einem der Ansprüche 8 bis 10, wobei die Lichtbogen-Fangeinrichtung (25, 26) einstückig als ein gebogenes Blechteil ausgebildet ist.
